# EUROPÄISCHE PATENTSCHRIFT

(11) **EP 1 627 766 B1**
(45) Veröffentlichungstag und Bekanntmachung des Hinweises auf die Patenterteilung: **02.09.2009**
(21) Anmeldenummer: 05105429.4
(22) Anmeldetag: 21.06.2005
(51) Int. Cl.: B60K 31/00, B60W 40/10, B60W 30/16

(54) **Fahrerassistenzsystem mit Einrichtung zur Spurwechselerkennung**
Driving assist system with lane changing recognition
Système d'assistance à la conduite avec détection de changement de voie

(30) Priorität: 17.08.2004 DE 102004039741
(43) Veröffentlichungstag der Anmeldung: 22.02.2006
(73) Patentinhaber: ROBERT BOSCH GMBH, 70442 Stuttgart (DE)
(72) Erfinder: Hellmann, Manfred, 71706 Hardthof (DE); Leineweber, Thilo, 70174 Stuttgart (DE); Urban, Werner, 71665 Vaihingen/Enz (DE)

(56) Entgegenhaltungen:
- EP-A1- 1 357 396
- WO-A2-02/21156
- DE-A1- 10 325 486
- US-A1- 2002 010 536
- US-A1- 2003 156 015
- US-A1- 2004 138 803
- US-B1- 6 304 811

## Beschreibung

### Stand der Technik

Die Erfindung betrifft ein Fahrerassistenzsystem für Kraftfahrzeuge, beispielsweise ein sogenanntes ACC -System (Adaptive Cruise Control), mit dem nicht nur die Geschwindigkeit des Fahrzeugs auf eine vom Fahrer gewählte Wunschgeschwindigkeit geregelt werden kann, sondern auch der Abstand zu einem vorausfahrenden Fahrzeug geregelt werden kann, das beispielsweise mit Hilfe eines Radarsensors geortet wird. Bei bestimmten Funktionen eines solchen Fahrerassistenzsystems ist es wünschenswert, einen Spurwechsel des eigenen Fahrzeugs zu erkennen. Es sind Systeme bekannt, die zu diesem Zweck den Lenkeinschlag der Vorderräder des Fahrzeugs auswerten, gegebenenfalls in Kombination mit anderen fahrdynamischen Größen wie z. B. der Gierrate. Andere bekannte Systeme nutzen eine Korrelation zwischen den mit Hilfe des Radarsensors gemessenen Winkelgeschwindigkeiten vorausfahrender Fahrzeuge u nd der Gierrate des eigenen Fahrzeugs.

Ein ACC-System muß in der Lage sein, das unmittelbar auf der eigenen Fahrspur vorausfahrende Fahrzeug, das als Zielobjekt für die Abstandsregelung dient, von Fahrzeugen auf Nebenspuren zu unterscheiden, und es sollte möglichst auch bei gekrümmtem Fahrbahnverlauf funktionsfähig bleiben. Falls das Zielobjekt aus irgendwelchen Gründen vorübergehend verloren geht, beispielsweise weil es in einer engen Kurve nicht mehr vom Radarsystem geortet werden kann, so wird ein Lost -Target-Algorithmus aktiviert, der verhindert, daß in solchen Fällen das eigene Fahrzeug beschleunigt und zu dicht auf das vordere Fahrzeug auffährt. Zumeist wird bei solchen Systemen auch anhand der Gierrate oder anhand ähnlicher Größen die Fahrbahnkrümmung abgeschätzt und anhand der Fahrbahnkrümmung der Verlauf des Fahrschlauches prädiziert, in dem sich die für die Abstandsregelung relevanten Zielobjekte befinden müssen.

Anhand der Lenkbewegungen oder der Gierrate des eigenen Fahrzeugs läßt sich nicht ohne weiteres entscheiden, ob das Fahrzeug in eine Kurve einfährt oder ob der Fahrer einen Spurwechselvorgang einleitet. Wenn im Falle eines Spurwechsels, beispielsweise auf die linke Nebenspur, das Fahrzeug die Spurgrenze überfährt und der Fahrer gegenlenkt, um das Fahrzeug wieder auf der neuen Fahrspur auszurichten, so kann dieses Gegenlenken vom ACC-System fälschlich als eine Fahrbahnkrümmung nach rechts interpretiert werden, so daß der Fahrschlauch entsprechend angepaßt wird. Dabei kann es leicht zu einer sogenannten Nebenspurstörung kommen, weil langsamere Fahrzeuge auf der rechten Nebenspur wieder in den prädizierten Fahrschlauch geraten und fälschlich als für die Abstandsregelung relevante Objekte interpretiert werden.

Aus der US 2002/010536 A1 ist ein Verfahren und eine Vorrichtung zur Erkennung eines Spurwechsels eines Kraftfahrzeugs bekannt, wobei in einer ersten Variante der Erfindung, eine die Querbeschleunigung des Fahrzeugs repräsentierende Querbeschieunigungsgröße und/oder eine Giergeschwindigkeit repräsentierende Giergröße ermittelt wird, deren zeitliche Änderung der Querbeschleunigungsgröße und/oder der Giergröße gebildet wird, und ein Spurwechsel dann erkannt, wenn die zeitliche Änderung einen vorgebbaren Schwellenwert überschreitet. Gemäß einer zweiten Variante ist vorgesehen, dass Drehzahlgrößen erfasst werden, die die Drehbewegungen wenigstens zweier Räder repräsentieren, eine die Fahrzeuglängsgeschwindigkeit repräsentierende Geschwindigkeitsgröße ermittelt wird, dann die Differenz zwischen der Drehzahlgröße des schnellsten Hinterrades und der Geschwindigkeitsgröße ermittelt wird, und eine Kurve und/oder ein Spurwechsel dann erkannt wird, wenn eine vorgebbare große Differenz in einer vorgebbar langen Zeitdauer vorliegt.

### Vorteile der Erfindung

Die Erfindung mit den in Anspruch 1 angegebenen Merkmalen bietet den Vorteil, daß sie eine frühzeitige Erkennung von Spurwechselvorgängen ermöglicht. Insbesondere kann ein Spurwechselvorgang schon erkannt werden, bevor er vollständig abgeschlossen ist, nämlich bereits dann, wenn die Gegenlenkphase beginnt. Dadurch wird die Voraussetzung für geeignete Gegenmaßnahmen geschaffen, mit denen sich die oben erwähnten Nebenspurstörungen vermeiden lassen.

Ein weiterer Vorteil der Erfindung besteht darin, daß für die Spurwechselerkennung nur ein einziges Signal, nämlich ein Gierratensignal, ausgewertet zu werden braucht. Somit wird keine aufwendige Sensorik benötigt, und die Erfindung läßt sich insbesondere auch bei ACC-Systemen einsetzen, die ohne Lenkwinkelsignal arbeiten.

Erfindungsgemäß wird der Spurwechsel daran erkannt, daß die mit dem Spurwechsel verbundenen Lenkbewegungen eine charakteristische Signatur im Gierratensignal hinterlassen. Zum Beispiel ist es für einen Spurwechsel auf gerader Straße charakteristisch, daß das Gierratensignal zunächst nach einer Seite, bei einem Wechsel auf die linke Nebenspur zur positiven Seite (Linksdrehung), vom Referenzwert 0 abweicht und dann nach einer begrenzten Zeitspanne, die nicht länger ist als die übliche Dauer eines Spurwechsels, zum Referenzwert 0 zurückkehrt und dann zur entgegengesetzten Seite durchschwingt. Dieses Durchschwingen entspricht dem Gegenlenken beim Einscheren auf die neue Fahrspur. Charakteristisch ist außerdem, daß das Durchschwingen relativ schnell erfolgt, so daß di e Änderungsrate, also die zeitliche Ableitung der Gierrate, oberhalb eines bestimmten Schwellenwertes liegt. Anhand dieser relativ einfachen Kriterien lassen sich Spurwechselvorgänge, insbesondere solche, die zu Nebenspurstörungen führen können, sehr zuverlässig erkennen.

Vorteilhafte Weiterbildungen und Ausgestaltungen der Erfindung ergeben sich aus den Unteransprüchen.

Um auch Spurwechselvorgänge auf gekrümmter Fahrbahn, beispielsweise in langgezogenen Kurven, erkennen zu können, ist es zweckmäßig, als Referenzwert für die Gierrate nicht den Wert 0 zu verwenden, sondern einen von der Vorgeschichte des Gierratensignals abhängigen zeitlichen Mittelwert, der beispielsweise durch Tiefpaßfilterung des Gierratensignals gebildet werden kann. Die Zeitkonstante de s Tiefpasses sollte dabei in der gleichen Größenordnung wie die typische Dauer eines Spurwechselvorgangs liegen. Beim Durchfahren eine langgezogenen Kurve wird sich dann das Gierratensignal auf einem Referenzwert stabilisieren, der der Fahrbahnkrümmung in der Kurve entspricht, und die Ausschläge und das Durchschwingen des Gierratensignals werden dann auf diesen Referenzwert bezogen. Da die Änderungsrate des Gierratensignals beim Durchschwingen nur wenig durch die aktuelle Fahrbahnkrümmung beeinflußt wird, lassen sich Spurwechselvorgänge in dieser Weise auch beim Einfahren in eine Kurve oder beim Ausfahren aus der Kurve erkennen.

Bevorzugt wird um den Referenzwert herum ein bestimmtes Toleranzintervall definiert, und wenn das Gierratensignal beispielsweise zur positiven Seite vom Referenzwert abweicht, so wird geprüft, ob das Gierratensignal danach innerhalb der vorgegebenen Zeitspanne die untere Grenze des Toleranzintervalls unterschreitet. Entsprechend wird bei einer Abweichung zur negativen Seite geprüft, wann das Gierratensignal wieder den oberen Grenzwert des Toleranzintervalls überschreitet. Durch geeignete Abstimmung des Toleranzintervalls und der Zeitkonstante des Tiefpaßfilters läßt sich erreichen, daß die Grenze des Toleranzintervalls gerade in dem Augenblick passiert wird, in dem das Fahrzeug auf der Nebenspur angekommen ist, jedoch bevor das nebenspurstörungsanfällige Gegenlenken beginnt.

Die Länge der vorgegebenen Zeitspanne, das Toleranzintervall, die Filterzeitkonstante und/oder der Schwellenwert für die Änderungsrate des Gierratensignals können geschwindigkeitsabhängig variiert werden, um dem Umstand Rechnung zu tragen, daß Spurwechselvorgänge bei hoher Fahrgeschwindigkeit im allgemeinen "sanfter" erfolgen.

Wenn ein Spurwechselvorgang erkannt wurde, lassen sich die Nebenspurstörungen z. B. dadurch vermeiden, daß der dem Gegenlenken entsprechende Ausschlag des Gierratensignals bei der Prädiktion des Fahrschlauches ignoriert wird. Dies kann z. B. in der Weise geschehen, daß für die Fahrschlauchprädi ktion ein modifiziertes Gierratensignal verwendet wird, bei dem der dem Gegenlenken entsprechende Ausschlag unterdrückt wird, indem die Gierrate auf das Toleranzintervall beschränkt wird.

Wahlweise oder zusätzlich läßt sich die Spurwechselerkennung auch dazu nutzen, den Lost-Target-Algorithmus vorübergehend zu deaktivieren. Wenn infolge des Spurwechsels das bisherige Zielobjekt verloren geht, läßt sich so vermeiden, daß der Lost - Target-Algorithmus eine sofortige Beschleunigung des Fahrzeugs verhindert. Somit kann bei erkanntem Spurwechsel und Verlust des bisherigen Zielobjekt automatisch ein sofortiger Beschleunigungsvorgang eingeleitet werden, der das Einfädeln auf die Nebenspur und den Überholvorgang erleichtert. Sofern der Verkehr auf der Nebenspur beispielsweise mit Hilfe eines Rückraumradars überwacht wird, ist es auch möglich, den Beschleunigungsvorgang so zu steuern, daß die Geschwindigkeit an die auf der Nebenspur gefahrenen Geschwindigkeit angepaßt wird.

### Zeichnung

Ein Ausführungsbeispiel der Erfindung ist in den Zeichnungen dargestellt und in der nachfolgenden Beschreibung näher erläutert.

Es zeigen:
- Fig. 1: ein Blockdiagramm eines Fahrerassistenzsystems;
- Fig. 2: eine Skizze eines Spurwechselvorgangs;
- Fig. 3: ein Zeitdiagramm eines Gierratensignals während eines Spurwechselvorgangs;
- Fig. 4: ein der Figur 3 entsprechendes Zeitdiagramm für die Änderungsrate des Gierratensignals;
- Fig. 5: ein Zeitdiagramm eines modifizierten Gierratensignals für die Unterdrückung von Nebenspurstörungen;
- Fig. 6: ein Flußdiagramm für eine im Fahrerassistenzsystem implementierte Hauptroutine zur Erkennung von Spurwechselvorgängen; und
- Fig. 7: ein Flußdiagramm einer Unterroutine zur Prüfung, ob ein Spurwechsel auf die linke Nebenspur stattfindet.

### Beschreibung des Ausführungsbeispiels

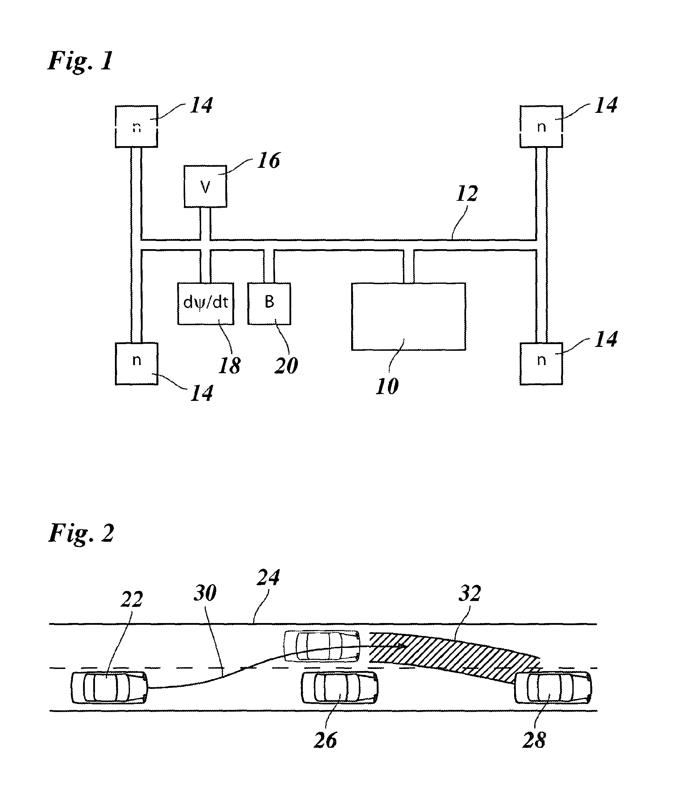

In Figur 1 ist vereinfacht als Block ein elektronisches Steuergerät 10 dargestellt, das in bekannter Weise durch einen oder mehrere Mikroprozessoren, zugehörige Daten - und Programmspeicher, Ein- und Ausgabeschnittstellen und dergleichen gebildet wird. Dieses Steuergerät 10 dient zur Ausführung verschiedener Fahrerassistenzfunktionen, etwa einer ACC - Funktion. Auch die Funktionen für das hier beschriebene Verfahren zur Spurwechselerkennung sind in dem Steuergerät 10 implementiert, beispielsweise in der Form von Programmen, die fest im Programmspeicher gespeichert sind.

Das Steuergerät 10 ist in einem Kraftfahrzeug installiert und kommuniziert über einen fahrzeugeigenen Datenbus 12, beispielsweise eine CAN-Bus, mit verschiedenen Sensoren, die zusammen ein Datenerfassungssystem zur Erfassung von Fahrzeugdaten, insbesondere auch von Bewegungsvariablen des Fahrzeugs bilden. Im gezeigten Beispiel handelt es sich bei den Sensoren um Raddrehzahlsensoren 14 zur Messung der Raddrehzahlen n der vier Räder des Fahrzeugs, einen Geschwindigkeitssensor 16 zur Messung der Fahrzeuggeschwindigkeit V sowie einen Gierratensensor 18 zur Messung der Gierrate dψ/dt, also der ersten zeitlichen Ableitung des Gierwinkels ψ des Fahrzeugs. Diese Sensoren sind lediglich als Beispiel zu verstehen und können durch andere Sensoren ergänzt oder ersetzt werden, beispielsweise durch Trägheitssensoren zur Messung der Querbeschleunigung oder Gierbeschleunigung und dergleichen. Aus den gemessenen Größen können verschiedene Bewegungsvariable des Fahrzeugs berechnet werden. Die Giergeschwindigkeit läßt sich z. B. auch anhand der gemessenen Raddrehzahldifferenzen berechnen. Wahlweise kann auch die Fahrzeuggeschwindigkeit V anhand der gemessenen Raddrehzahlen berechnet werden. Ebenso ist es möglich, anstelle des Gierratensensors 18 einen Lenkwinkelsensor zu verwenden und die Gierrate aus dem Lenkwinkelsignal und der Fahrzeuggeschwindigkeit V zu berechnen. Weiterhin läßt sich die Gierrate auch aus der gemessenen Querbeschleunigung und der Fahrzeuggeschwindigkeit berechnen.

An den Datenbus 12 ist außerdem ein Fühler 20 angeschlossen, der den Zustand des Fahrtrichtungsanzeigers des Fahr zeugs angibt.

Über den Datenbus 12 wird das Steuergerät 10 quasi kontinuierlich mit den Daten versorgt, die es zur Erkennung eines Spurwechselvorgangs benötigt, insbesondere einem Gierratensignal dψ/dt und der Fahrzeuggeschwindigkeit V.

Figur 2 illustriert eine einfache Beispielsituation, in der ein mit dem Fahrerassistenzsystem nach Figur 1 ausgerüstetes Fahrzeug 22 auf einer geraden, zweispurigen Fahrbahn 24 einen Spurwechsel vornimmt, um zwei andere Fahrzeuge 26, 28 zu überholen, wie durch einen Pfeil 30 symbolisiert wird.

Solange das Fahrzeug 22 noch auf der rechten Spur fährt, wird das unmittelbar vorausfahrende Fahrzeug 26 vom Radarsensor des ACC-Systems geortet, und dieses Fahrzeug 26 bildet das Zielobjekt für die Abstandsregelung. Um den Spurwechselvorgang einzuleiten, lenkt der Fahrer des Fahrzeugs 22 zunächst nach links. Dabei kann das Fahrzeug 26 aus dem Ortungsbereich des Radarsensors verschwinden. Normalerweise wird dadurch im ACC - System eine Lost-Target-Funktion aktiviert, die für den Fall, daß das Fahrzeug 26 als Zielobjekt relevant bleibt und nur vorübergehend aus dem Ortungsbereich ausgewandert ist, eine Beschleunigung des Fahrzeugs 22 verhindert. In der hier betrachteten Situation ist diese Systemreaktion jedoch unerwünscht, da das Fahrzeug 26 ja überholt werden soll.

Wenn das Fahrzeug 22 die Spurgrenze zur linken Nebenspur überfährt, lenkt der Fahrer nach rechts gegen, um das Fahrzeug wieder parallel zur Fahrspur auszurichten, wie i n Figur 2 in dünneren Linien eingezeichnet ist. Dieses Gegenlenken nach rechts wird vom ACC-System normalerweise so interpretiert, als befinde sich das Fahrzeug in einer Rechtskurve. Im Rahmen der ACC-Funktion wird in Abhängigkeit von der vermeintlichen Fahrbahnkrümmung ein Fahrschlauch 32 prädiziert, in dem nach relevanten Zielobjekten für die Abstandsregelung gesucht wird. Aufgrund der vermeintlichen Rechtskrümmung der Fahrbahn, ist der Fahrschlauch 32 in Figur 2 nach rechts gekrümmt, mit der Folge, daß das Fahrzeug 28 innerhalb dieses Fahrschlauches liegt. Dies wird nun im ACC-System fälschlich so interpretiert, als befinde sich das Fahrzeug 28 auf der vom eigenen Fahrzeug 22 befahren Spur und stelle somit ein relevantes Zielobjekt dar. Die Folge ist eine unerwünschte Verzögerung des Fahrzeugs 22 zur Anpassung an die Geschwindigkeit des Fahrzeugs 28. Dieser Effekt wird als Nebenspurstörung bezeichnet.

Im Steuergerät 10 ist ein Algorithmus implementiert, der es ermöglicht, die oben beschriebenen nachteilig en Effekte zu vermeiden. Dieser Algorithmus wird im folgenden näher erläutert.

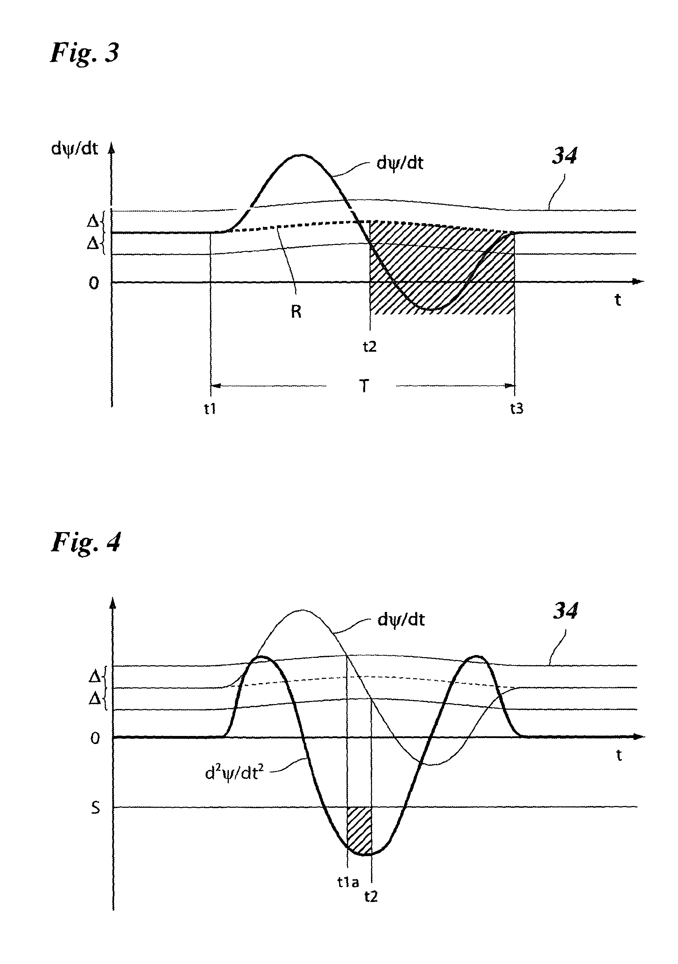

In Figur 3 ist das Gierratensignal dψ/dt gegen die Zeit t aufgetragen. Zu einem Zeitpunkt t1 beginnt ein Spurwechselvorgang, bei dem der Fahrer auf die linke Nebenspur wechselt. Dementsprechend lenkt der Fahrer nach links, so daß das Gierratensignal zunächst zur positiven Seite ansteigt. Etwa zum Zeitpunkt t2 ist das Gierratensignal wieder auf den ursprünglichen Wert abgefallen, und es beginnt die Gegenlenkphase, die durch einen Ausschlag des Gierratensignals zur negativen Seite gekennzeichnet ist. Zum Zeitpunkt t3 ist die Gegenlenkphase und damit der gesamte Spurwechselvorgang abgeschlossen. Für einen solchen Spurwechselvorgang wird typischerweise eine begrenzte Zeitspanne T benö tigt.

Die in Figur 3 betrachtete Situation unterscheidet sich von der in Figur 2 illustrierten Situation dadurch, daß in Figur 3 der Spurwechsel in einer langgezogenen Linkskurve mit konstanter Krümmung stattfindet. Dementsprechend hat das Gierratensignal dψ/dt schon vor dem Zeitpunkt t1 einen von 0 verschiedenen, positiven Wert, der der Fahrbahnkrümmung in der Kurve entspricht. Auch nach dem Zeitpunkt t3 nimmt das Gierratentsignal wieder diesen positiven Wert an, da die Kurve noch nicht beendet ist. Die in Figur 3 gestrichelt eingezeichnete Kurve gibt den zeitlichen Verlauf eines Referenzwertes R an, der dadurch gebildet wird, daß das Gierratensignal dψ/dt einer Tiefpaßfilterung unterzogen wird. Die Zeitkonstante des Tiefpaßfilters liegt etwa in der Größenordnung der Zeitspanne T, so daß die während eines Spurwechsels auftretenden Ausschläge des Gierratensignals weitgehend geglättet werden und nur einen leichten "Bauch" im Referenzsignal verursachen.

Um den Referenzwert R herum ist ein symmetrischer Toleranzbereich 34 der Breite 2 Δ definiert. Zur Erkennung des Spurwechselvorgangs wird nun zunächst geprüft, ob das Gierratensignal dψ/dt signifikant vom Referenzwert R abweicht. Als Kriterium für eine signifikante Abweichung kann beispielsweise das Kriterium dienen, daß die Abweichung größer ist als Δ. Wahlweise kann jedoch auch eine kleinere Toleranzschwelle gewählt werden. Nachdem eine signifikante Abweichung festgestellt wurde, wird geprüft, ob innerhalb eines begrenzten Zeitintervalls, das beispielsweise gleich T oder etwas kleiner ist, das Gierratensignal wieder zum Referenzwert zurückkehrt und vollständig durch das Toleranzintervall 34 durchschwingt. Wenn das Gierratennsignal zunächst zur positiven Seite ausschlägt, wie in Figur 3, wird geprüft, ob der Zeitpunkt t2, an dem das Gierratensignal kleiner wird als die untere Grenze des Toleranzintervalls 34, noch innerhalb der Zeitspanne T liegt.

Wenn diese Bedingung erfüllt ist, erscheint die Annahme eines Spurwechsels als plausibel, doch könnte auch der Fall vorliegen, daß der Fahrer lediglich innerhalb der bisherigen Fahrspur die Lage des Fahrzeugs relativ zur Spurmitte korrigiert hat. Die endgültige Entscheidung beruht deshalb auf der zusätzlichen Überlegung, daß bei einem echten Spurwechsel die positiven und negativen Ausschläge des Gierratensignals eine bestimmte Amplitude haben oder, gleichbedeutend damit, daß das Toleranzintervall 34 relativ rasch durchquert wird, also mit einer Änderungsrate, die über einem bestimmten Schwellenwert liegt.

Dieses Kriterium ist in Figur 4 illustrie rt, wo die Änderungsrate d²ψ/dt² des Gierratensignals gegen die Zeit aufgetragen ist. Speziell besteht das überprüfte Kriterium hier darin, daß die Änderungsrate d²ψ/dt² im gesamten Zeitintervall zwischen dem Zeitpunkt t1a, an dem das Durchschwingen durch das Toleranzintervall 34 beginnt, und dem Zeitpunkt t2, an dem das Durchschwingen beendet ist, dem Betrage nach größer ist als ein vorgegebener Schwellenwert S.

Somit läßt sich bereits zum Zeitpunkt t2 entscheiden, ob sämtliche Kriterien für einen echten Spurwechselvorgang erfüllt sind, und während des in Figur 3 schraffiert dargestellten Zeitintervalls zwischen t2 und t3 ist somit bereits bekannt, daß ein Spurwechselvorgang stattfindet. Diese Information kann dann z. B. dazu benutzt werden, den Lost -Target-Algorithmus zu deaktivieren und/oder eine Fahrschlauchanpassung zu verhindern, um Nebenspurstörungen zu vermeiden.

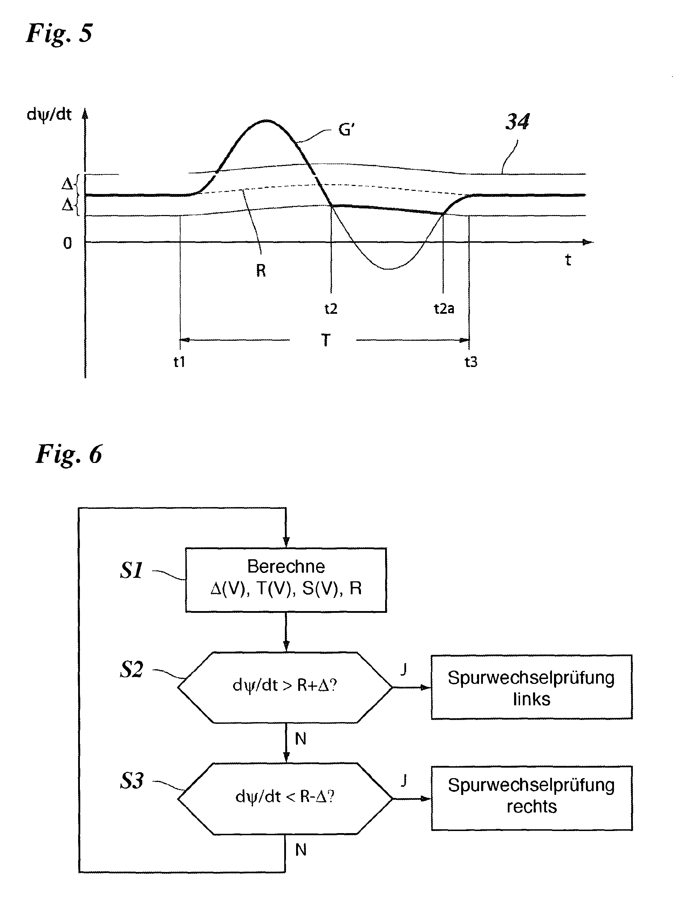

Figur 5 zeigt den zeitlichen Verlauf eines modifizierten Gierratensignals G', das für die Prädiktion des Fahrschlauches 32 (Figur 2) benutzt wird. Dieses modifizierte Gierratensignal G' unterscheidet sich von dem tatsächlich gemessenen Gierratensignal dψ/dt dadurch, daß im Zeitintervall zwischen den Zeitpunkten t2 und t2a, in denen die gemessene Gierrate unterhalb des Toleranzintervalls 34 liegt, die gemessene Gierrate durch die untere Grenze des Toleranzintervalls 34 ersetzt wird. Das bedeutet, daß die für die Fahrschlauchprädiktion zugrunde gelegte Gierrate sich höchstens um Δ vom Referenzwert R unterscheidet und somit die angenommene Krümmung nur wenig von der tatsächlichen Fahrbahnkrümmung abweicht, so daß der prädizierte Fahrschlauch 32 innerhalb der neuen Fahrspur des Fahrzeugs 22 bleibt.

Figur 6 zeigt ein Flußdiagramm für einen Algorithmus, mit dem im Steuergerät 10 periodisch, also quasi permanent, das Gierratensignal dψ/dt überwacht und ausgewertet wird. In Schritt S1 werden die Toleranzschwelle Δ, die Zeitspanne T und der Schwellenwert S in Abhängigkeit von der aktuellen Fahrzeuggeschwindigkeit V berechnet. Dazu können einfache Formeln oder Tabellen benutzt werden, mit denen eine gute Anpassung dieser Parameter an die Fahrzeuggeschwindigkeit erreicht wird. Weiterhin wird in Schritt S1 durch Tiefpaßfilterung der Referenzwert R aktualisiert.

In Schritt S2 wird dann geprüft, ob das Gierratensignal das Toleranzintervall 34 zur positiven Seite verlassen hat. In diesem Fall wird eine Unterrotine "Spurwec hselprüfung links" aufgerufen. Andernfalls wird in Schritt S3 überprüft, ob das Gierratensignal das Toleranzintervall 34 zur negativen Seite verlassen hat. In diesem Fall wird eine Unterrotine "Spurwechselprüfung rechts" aufgerufen. Ist das Gierratensignal im Toleranzintervall geblieben, erfolgt ein Rücksprung zu Schritt S1.

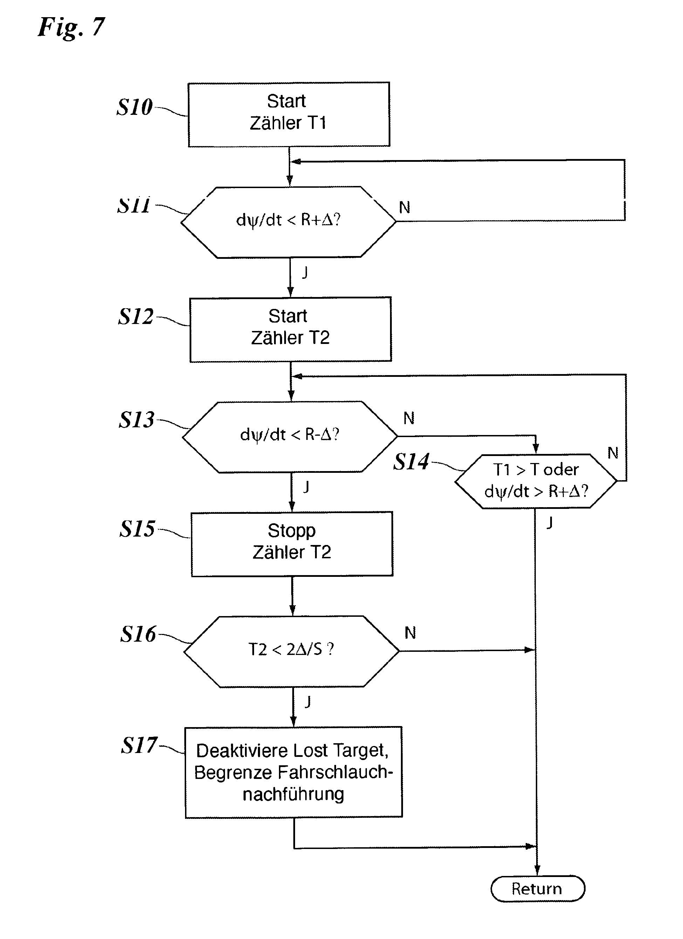

Figur 7 zeigt ein Flußdiagramm für die Unterrotine "Spurwechselprüfung links". Für die Unterrotine "Spurwechselprüfung rechts" gilt die nachstehende Beschreibung sinngemäß.

In Schritt S10 wird ein Zähler T1 gestartet, um die seit Beginn des potentiellen Spurwechselvorgangs abgelaufene Zeit zu messen. In Schritt S11 wird geprüft, ob das Gierratensignal wieder in das Toleranzintervall 34 zurückgefallen ist. Dieser Schritt S11 wird so lange wiederholt, bis die genannte Bedingung erfüllt ist. Dabei ist zu bemerken, daß der Referenzwert R in Schritt S11 fortlaufend aktualisiert wird. Das heißt, auch wenn das Gierratensignal konstant bleibt, wird die Bedingung in Schritt S11 irgendwann erfüllt, weil der Referenzwert ständig anwächst. Da jedoch die Zeitkonstante des Tiefpaßfilters etwa der Zeitspanne T entspricht, wird die den Schritt S11 enthaltende Schleife von bei konstanter Gierrate erst nach längerer Zeit verlassen. In der in Figuren 3 und 4 gezeigten Spurwechselsituation wird die Schleife dagegen schon zum Zeitpunkt t1a verlassen.

In Schritt S12 wird dann ein Zähler T2 zurückgesetzt und gestartet, und in Schritt S13 wird geprüft, ob das Gierratensignal das Toleranzintervall 34 vollständig durchquert hat. In Figuren 3 und 4 wäre diese Bedingung erstmals zum Zeitpunkt t2 erfüllt.

Auch der Schritt S13 wird in einer Schleife periodisch wiederholt, bis die Bedingung erfüllt ist, doch kann diese Schleife verlassen werden, wenn in einem Schritt S14 festgestellt wird, daß seit Schritt S10 die Zeitspanne T abgelaufen ist oder daß die Gierrate wieder zur positiven Seite aus dem Toleranzintervall 34 ausgewandert ist. In diesen Fällen erfolgt ein Rücksprung zu Schritt S1 in Figur 6. Falls die Gierrate wieder nach oben aus dem Toleranzintervall ausgewandert ist, wird die Unterrotine nach Figur 7 jedoch über Schritt S2 sofort wieder aufgerufen.

Wenn die Schleife über Schritt 13 normal verlassen wurde, so wird in Schritt S15 der Zähler T2 angehalten, und in Schritt S16 wird geprüft, ob die vom Zähler T2 gezählte Zeit, also z. B. das Zeitintervall zwischen t1a und t2 in Figur 4, kleiner ist als 2Δ/S. Diese Bedingung bedeutet, daß die Änderungsrate d ²ψ/dt² = 2Δ/T2 dem Betrage nach größer ist als S und somit ein echter Spurwechsel vorliegt. In diesem Fall wird in Schritt S17 der Lost-Target-Algorithmus deaktiviert und die Fahrschlauchnachführung begrenzt, wie mit Bezug auf Figur 5 beschrieben wurde. Anschließend erfolgt ein Rücksprung zu Schritt S1 in Figur 6. Bei einem negativen Ergebnis der Überprüfung in Schritt S16 erfolgt der Rücksprung direkt, unter Auslassung des Schrittes S17.

Die in Schritt S16 geprüfte Bedingung ist etwas schwächer als die Bedingung, die anhand der Figur 4 illustriert wurde, denn in Figur 16 wird nur verlangt, daß die durchschnittliche Änderungsrate des Gierratensignals größer ist als der Schwellenwert, während in Figur 4 verlangt wurde, daß die Änderungsrate im gesamten Zeitintervall zwischen t1a und t2 größer ist als der Schwellenwert. Es sind beide Ausführungsvarianten möglich.

## Patentansprüche

1. Fahrerassistenzsystem für Kraftfahrzeuge, mit einer Erkennungseinrichtung (10) für Spurwechsel des eigenen Fahrzeugs (22), wobei die Erkennungseinrichtung (10) dazu ausgebildet ist, ein für die Gierbewegung des Fahrzeugs (22) repräsentatives Gierratensignal (dΨ/dt) zu überwachen und einen Spurwechsel daran zu erkennen daß das Gierratensignal nach einer Richtung von einem Referenzwert (R) abweicht und danach innerhalb einer begrenzten Zeitspanne (T) zu dem Referenzwert zurückkehrt und mit einer Änderungsrate, die größer als ein bestimmter Schwellenwert (S) ist, zur anderen Seite des Referenzwertes durchschwingt, **dadurch gekennzeichnet, daß** die Erkennungseinrichtung (10) dazu ausgebildet ist, den Referenzwert (R) dynamisch in Abhängigkeit von vorherigen Werten des Gierratensignals (dΨ/dt) zu variieren, wobei der Referenzwert (R) der Wert des Gierratensignals nach Tiefpaßfilterung mit einer Filterzeitkonstanten ist, die in der gleichen Größenordnung wie die begrenzte Zeitspanne (T) liegt.

2. Fahrerassistenzsystem nach einem der vorstehenden Ansprüche, **dadurch gekennzeichnet, daß** um den Referenzwert (R) ein Toleranzintervall (34) definiert ist, und daß die Erkennungseinrichtung (10) dazu ausgebildet ist zu prüfen, ob das Gierratensignal (dΨ/dt), nachdem es das Toleranzintervall (34) in einer Richtung verlassen hat, innerhalb der begrenzten Zeitspanne (T) das Toleranzintervall (34) in der entgegengesetzten Richtung verlassen hat.

3. Fahrerassistenzsystem nach einem der vorstehenden Ansprüche, **dadurch gekennzeichnet, daß** die Erkennungseinrichtung (10) dazu ausgebildet ist, die Länge der Zeitspanne (T), den Schwellenwert (S) und/oder die Breite (2Δ) des Toleranzintervalls (34) dynamisch in Abhängigkeit von der Fahrzeuggeschwindigkeit (V) zu variieren.

4. Fahrerassistenzsystem nach einem der vorstehenden Ansprüche, mit einem Ortungssystem zur Ortung von Fahrzeugen (26, 28) auf der eigenen Fahrspur, **dadurch gekennzeichnet, daß** die Erkennungseinrichtung (10) Teil einer Einrichtung zur Unterdrückung von Nebenspurstörungen ist.

5. Fahrerassistenzsystem nach Anspruch 4, **dadurch gekennzeichnet, daß** dem Ortungssystem eine Einrichtung zur Prädiktion eines Fahrschlauches (32) zugeordnet ist, der dem voraussichtlichen Verlauf der eigenen Fahrspur entspricht, und daß die Erkennungseinrichtung (10) zur Unterdrückung von Nebenspurstörungen ein modifiziertes Gierratensignal (G') erzeugt, bei dem nach erkanntem Spurwechsel der dem Gegenlenken des Fahrzeugs gegen Ende des Spurwechselvorgangs entsprechende Ausschlag des Gierratensignals unterdrückt ist.

6. Fahrerassistenzsystem nach den Ansprüchen 2 und 5, **dadurch gekennzeichnet, daß** das modifizierte Gierratensignal (G') nach erkanntem Spurwechsel auf das Toleranzintervall (34) begrenzt ist.

7. Fahrerassistenzsystem nach einem der vorstehenden Ansprüche, mit einem Ortungssystem zur Ortung eines Zielobekts (26) für eine Abstandsregelung und mit einer Lost-Target-Funktion, die bei Verlust des Zielobjektes (26) vorübergehend in die Regelung eingreift, um ein zu dichtes Auffahren auf das Zielobjekt zu verhindern, **dadurch gekennzeichnet, daß** die Erkennungseinrichtung (10) ein Signal zum Deaktivieren der Lost-Target-Funktion liefert.

## Claims

1. Driver assistance system for motor vehicles, having a detection device (10) for detecting lane changes of the driver's own vehicle (22), wherein the detection device (10) is designed to monitor a yaw rate signal (dΨ/dt) which is representative of the yaw movement of the vehicle (22), and to detect a lane change from the fact that the yaw rate signal differs from a reference value (R) in one direction and then returns to the reference value within a limited time period (T) and oscillates through to the other side of the reference value with a rate of change which is greater than a specific threshold value (S),
**characterized in that** the detection device (10) is designed to vary the reference value (R) dynamically as a function of preceding values of the yaw rate signal (dΨ/dt), wherein the reference value (R) is the value of the yaw rate signal after low-pass filtering with a filter time constant which is of the same order of magnitude as the limited time period (T).

2. Driver assistance system according to one of the preceding claims, **characterized in that** a tolerance interval (34) about the reference value (R) is defined, and **in that** the detection device (10) is designed to check whether, after the yaw rate signal (dΨ/dt) has departed from the tolerance interval (34) in one direction, said yaw rate signal (dΨ/dt) has departed for the tolerance interval (34) in the opposite direction within the limited time period (T).

3. Driver assistance system according to one of the preceding claims, **characterized in that** the detection device (10) is designed to vary the length of the time period (T), the threshold value (S) and/or the width (2Δ) of the tolerance interval (34) dynamically as a function of the velocity (V) of the vehicle.

4. Driver assistance system according to one of the preceding claims, having a locating system for locating vehicles (26, 28) on the driver's own lane, **characterized in that** the detection device (10) is part of a device for suppressing adjacent lane interference.

5. Driver assistance system according to Claim 4, **characterized in that** a device for predicting a driving tube (32) which corresponds to the anticipated profile of the driver's own lane is assigned to the locating system, and **in that** the detection device (10) generates, for the purpose of suppressing adjacent lane interference, a modified yaw rate signal (G') in which, after the lane change has been detected, the deflection of the yaw rate signal which corresponds to the steering of the vehicle in the opposite direction towards the end of the lane changing process is suppressed.

6. Driver assistance system according to Claims 2 and 5, **characterized in that** the modified yaw rate signal (G') is limited to the tolerance interval (34) after a lane change has been detected.

7. Driver assistance system according to one of the preceding claims, having a locating system for locating a target object (26) for an inter-vehicle distance control process, and having a lost target function which, when the target object (26) is lost, temporarily intervenes in the control process in order to prevent a vehicle from driving up too close to the target object, **characterized in that** the detection device (10) supplies a signal for deactivating the lost target function.

## Revendications

1. Système d'assistance au conducteur d'un véhicule automobile, qui présente un dispositif (10) de détection d'un changement de bande de circulation de ce véhicule (22), le dispositif (10) de détection étant configuré pour surveiller un signal (dΨ/dt) de vitesse de lacet représentatif d'un déplacement de lacet du véhicule (22) et pour détecter un changement de bande de circulation lorsque le signal de vitesse de lacet s'écarte dans une direction d'une valeur de référence (R) et ensuite retourne à la valeur de référence à l'intérieur d'un intervalle de temps limité (T) et revient vers l'autre côté de la valeur de référence à une vitesse de modification supérieure à une valeur de seuil définie (S),
**caractérisé en ce que**
le dispositif (10) de détection est configuré pour modifier dynamiquement la valeur de référence (R) en fonction de valeurs précédentes du signal (dΨ/dt) de vitesse de lacet, la valeur de référence (R) étant la valeur du signal de vitesse de lacet après filtrage passe-bas avec une constante de temps de filtrage du même ordre de grandeur que l'intervalle de temps limité (T).

2. Système d'assistance du conducteur selon l'une des revendications précédentes, **caractérisé en ce qu'**un intervalle de tolérance (34) est défini autour de la valeur de référence (R) et **en ce que** le dispositif de détection (10) est configuré pour vérifier si le signal (dΨ/dt) de vitesse de lacet qui a quitté l'intervalle de tolérance (34) dans une direction a quitté l'intervalle de tolérance (34) dans la direction opposée à l'intérieur de l'intervalle de temps limité (T).

3. Système d'assistance au conducteur selon l'une des revendications précédentes, **caractérisé en ce que** le dispositif de détection (10) est configuré pour modifier dynamiquement la longueur de l'intervalle de temps (T), la valeur de seuil (S) et/ou la largeur (2Δ) de l'intervalle de tolérance (34) en fonction de la vitesse (V) du véhicule.

4. Système d'assistance au conducteur selon l'une des revendications précédentes, doté d'un dispositif de localisation qui localise les véhicules (26, 28) présents sur la bande de circulation occupée par ce véhicule, **caractérisé en ce que** le dispositif de détection (10) fait partie d'un dispositif destiné à empêcher des perturbations par les bandes de circulation voisines.

5. Système d'assistance au conducteur selon la revendication 4, **caractérisé en ce qu'**au dispositif de localisation est associé un dispositif de prédiction d'une manoeuvre de déplacement (32) qui correspond à l'évolution prévue sur sa propre bande de circulation et **en ce que** le dispositif de détection (10) forme un signal modifié de vitesse de lacet (G') en vue d'empêcher des perturbations par les bandes de circulation voisines et **en ce qu'**après détection d'un changement de bande de circulation, un excès du signal de vitesse de lacet qui correspond au contre-braquage du véhicule vers la fin de l'opération de changement de bande de circulation est diminué.

6. Système d'assistance au conducteur selon les revendications 2 et 5, **caractérisé en ce que** le signal modifié de vitesse de lacet (G') est limité à l'intervalle de tolérance (34) lorsqu'un changement de bande de circulation a été détecté.

7. Système d'assistance au conducteur selon l'une des revendications précédentes, doté d'un dispositif de localisation qui localise un objet cible (26) en vue de réguler la distance et doté d'une fonction de détection de perte de cible qui, lorsque l'objet cible (26) est perdu, intervient transitoirement dans la régulation pour empêcher de s'approcher trop étroitement de l'objet cible, **caractérisé en ce que** le dispositif de détection (10) délivre un signal de désactivation de la fonction de détection de perte de cible.
